# EUROPÄISCHE PATENTSCHRIFT

(11) **EP 3 645 374 B1**
(45) Veröffentlichungstag und Bekanntmachung des Hinweises auf die Patenterteilung: **27.04.2022**
(21) Anmeldenummer: 18748857.2
(22) Anmeldetag: 26.06.2018
(51) Int. Cl.: B62D 9/00, B60L 15/20

(54) **STEER-BY-WIRE-LENKSYSTEM MIT TORQUE-VECTORING UND INTEGRIERTER ANTI-SCHLUPF-REGELUNG**
STEER-BY-WIRE STEERING SYSTEM WITH TORQUE VECTORING AND INTEGRATED ANTI-SLIP CONTROL
SYSTÈME DE DIRECTION À COMMANDE PAR CÂBLE ÉLECTRIQUE À VECTORISATION DE COUPLE ET RÉGULATION ANTIPATINAGE INTÉGRÉE

(30) Priorität: 29.06.2017 DE 102017114494
(43) Veröffentlichungstag der Anmeldung: 06.05.2020
(73) Patentinhaber: thyssenkrupp Presta AG, 9492 Eschen (LI); thyssenkrupp AG, 45143 Essen (DE)
(72) Erfinder: LAPIS, Leonard, 9466 Sennwald (CH)
(74) Vertreter: thyssenkrupp Intellectual Property GmbH
(86) Internationale Anmeldenummer: PCT/EP2018/067105
(87) Internationale Veröffentlichungsnummer: WO 2019/002288

(56) Entgegenhaltungen:
- DE-A1-102008 049 992

## Beschreibung

Die vorliegende Erfindung betrifft ein Steer-by-Wire-Lenksystem eines Kraftfahrzeuges mit den Merkmalen des Oberbegriffs des Anspruchs 1 und ein Verfahren zur Steuerung eines Steer-by-Wire-Lenksystems eines Kraftfahrzeuges mit den Merkmalen des Oberbegriffs des Anspruchs 5.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt.

Um instabile Fahrsituationen, wie Übersteuern oder Untersteuern zu vermeiden, ist das sogenannte "Torque-Vectoring" bekannt, bei dem ein Antriebsmoment zwischen einem linken und einem rechten Fahrzeugrad mittels eines speziell ausgebildeten Differenzialgetriebes verteilt wird, um auf diese Weise dem Untersteuern oder Übersteuern entgegenzuwirken. So wird bei einer instabilen Fahrsituation ein Rad abgebremst, während die Antriebskraft an das Rad geleitet wird, welches die größte Giermomentreduktion aufweist, das heißt, kommt es zum Untersteuern, beaufschlagt die Steuerung das kurvenäußere Rad über eine separate Kupplung mit mehr Antriebskraft, sodass das Fahrzeug in die Kurve "hineingeschoben" wird. Während der Fahrt kann es zu ungewünschtem Schlupf der Fahrzeugräder kommen. Längsschlupf entsteht aufgrund von Durchdrehen oder Blockieren der Fahrzeugräder und wirkt sich direkt auf den Reifenverschleiß aus. Unter dem Begriff "Schlupf" wird der Zustand verstanden, wenn sich beim Beschleunigen oder Bremsen des Fahrzeugs die Radumfangsgeschwindigkeit von der Fahrzeuggeschwindigkeit unterscheidet.

Die DE 10 2013 011 883 A1 offenbart ein Verfahren, bei dem mittels eines Lenkraddrehwinkels ein Soll-Lenkwinkel berechnet und ein Ist-Lenkwinkel von den Fahrzeugrädern bereitgestellt wird. Die Bestimmung der Radantriebsmomente für das linke und rechte Rad erfolgt dabei derart, dass die Differenz zwischen Soll-und Ist-Lenkwinkel verkleinert wird. Als nachteilig erweist sich diese Lösung dahingehend, weil das Durchdrehen der Räder nicht berücksichtigt wird.

Die DE 10 2008 049 992 A1 wird als nächster Stand der Technik in Bezug auf den Gegenstand der unabhängigen Ansprüche angesehen und offenbart eine Kraftfahrzeuglenkvorrichtung mit zwei Antriebsmitteln für Antriebsräder, die für eine Lenkwirkung um einen Lenkwinkel verstellbar sind. Die Antriebsmittel können über eine Antriebseinheit so angesteuert werden, dass diese voneinander abweichende Antriebsmomente aufweisen. Hierzu stellt die Antriebseinheit, bei einer Verstellung des Lenkwinkels, die Antriebsmomente in Abhängigkeit von einem Lenkwert ein.

Aus der Patentschrift EP 2 611 661 B1 ist ein Torque-Vectoring Verfahren bekannt, bei welchem der Drehmomentensteuerwert der beiden Räder sich aus der Gierrate des Fahrzeugs, dem Lenkwinkel und dem Längsschlupf beider Räder ergibt.

Es ist Aufgabe der vorliegenden Erfindung, ein Steer-by-Wire-Lenksystem eines Kraftfahrzeuges mit Einzelradantrieb auf der Vorderachse anzugeben, bei dem Schlupf der Fahrzeugräder mittels Torque-Vectoring verhindert werden kann. Weiter soll ein Verfahren zur Vermeidung von Schlupf mittels Torque-Vectoring angegeben werden.

Diese Aufgabe wird von einem Steer-by-Wire-Lenksystem eines Kraftfahrzeuges mit den Merkmalen des Anspruchs 1 und einem Verfahren mit den Merkmalen des Anspruchs 5 gelöst.

Demnach ist ein Steer-by-Wire-Lenksystem für ein Kraftfahrzeug mit einer zwei lenkbare Räder aufweisenden lenkbaren Vorderradachse, wobei die Vorderradachse einen Einzelradantrieb aufweist, der mittels einer Antriebssteuerung den lenkbaren Rädern zugeordnete Radantriebe einzeln antreibt, vorgesehen, wobei die Antriebssteuerung einen Regler aufweist, der in Abhängigkeit von einem Gaspedalwinkel und einem Drehwinkel einer Lenkwelle eine Sollgeschwindigkeit für ein linkes Rad der lenkbaren Räder und eine Sollgeschwindigkeit für ein rechtes Rad der lenkbaren Räder bestimmt und diese auf eine schlupfbegrenzte Geschwindigkeit begrenzt, wobei die Antriebssteuerung die Radantriebe einzeln derart antreibt, dass die Differenz zwischen Sollgeschwindigkeit und Istgeschwindigkeit für jedes lenkbare Rad minimal ist. Es wird somit verhindert, dass die Vorderräder durchdrehen und das Fahrzeug nicht nur durch Lenkung beschleunigt wird. Eine Reduktion des Schlupfes wird verbessert, bei der der Verlust der Traktion und der Seitenführung eingeschränkt werden kann. Gleichzeitig steigen die Fahrdynamik und die Fahrsicherheit.

Vorzugsweise erfolgt die Begrenzung auf die schlupfbegrenzte Geschwindigkeit mittels eines vordefinierten maximal zulässigen Längsschlupfs und einer an einer Hinterachse des Kraftfahrzeuges abgegriffenen Durchschnittsfahrzeuggeschwindigkeit.

Vorteilhafterweise liegt der maximal zulässige Längsschlupf in einem Bereich von 5% bis 15% der an der Hinterachse abgegriffenen Durchschnittsfahrzeuggeschwindigkeit, bevorzugt bei etwa 10%.

Es ist bevorzugt, dass die Radantriebe Elektromotoren sind.

Weiterhin ist ein Verfahren zur Steuerung eines Steer-by-Wire-Lenksystems eines Kraftfahrzeuges mit einer zwei lenkbare Räder aufweisenden lenkbaren Vorderradachse vorgesehen, wobei die Vorderradachse einen Einzelradantrieb aufweist, der mittels einer Antriebssteuerung den lenkbaren Rädern zugeordnete Radantriebe einzeln antreibt, und wobei das Verfahren folgende Schritte umfasst:
- Messen eines Gaspedalwinkels, eines Drehwinkels einer Lenkwelle und Istgeschwindigkeiten der lenkbaren Räder,
- Bestimmen einer Solldurchschnittsgeschwindigkeit der Vorderräder mittels des Gaspedalwinkels,
- Ermitteln einer Differenzgeschwindigkeit der Vorderräder anhand des Drehwinkels der Lenkwelle,
- Bestimmen einer Sollgeschwindigkeit für ein linkes Rad der lenkbaren Räder und einer Sollgeschwindigkeit für ein rechtes Rad der lenkbaren Räder anhand der Solldurchschnittsgeschwindigkeit der Vorderräder und der Differenzgeschwindigkeit der Vorderräder,
- Begrenzen der Sollgeschwindigkeit für das linke Rad der lenkbaren Räder und der Sollgeschwindigkeit für das rechte Rad der lenkbaren Räder auf eine schlupfbegrenzte Geschwindigkeit,
- Bestimmen einer Differenz zwischen den Sollgeschwindigkeiten für das linke Rad der lenkbaren Räder und das rechte Rad der lenkbaren Räder und den Istgeschwindigkeiten der lenkbaren Räder und Berechnen der

Antriebsmoment für die lenkbaren Räder zur Minimierung der Differenz. Das Antriebsmoment für die einzeln angetriebenen Vorderräder wird somit so eingestellt, dass die Differenz zwischen Soll-und Istgeschwindigkeit der Vorderräder minimiert wird und dadurch das Fahrzeug bei jedem Gaspedal- und Lenkradwinkels der Lenkwelle innerhalb des vorgegeben Schlupfbereichs lenkt.

Vorzugsweise erfolgt die Begrenzung auf die schlupfbegrenzte Geschwindigkeit mittels eines vordefinierten maximal zulässigen Längsschlupfs und einer an einer Hinterachse abgegriffenen Durchschnittsfahrzeuggeschwindigkeit.

Dabei ist es vorteilhaft, wenn der maximal zulässige Längsschlupf in einem Bereich von 5% bis 15% der an der Hinterachse abgegriffenen Durchschnittsfahrzeuggeschwindigkeit liegt, bevorzugt bei 10%.

Vorzugsweise berücksichtigt die Begrenzung der Sollgeschwindigkeiten auf die an der Hinterachse abgegriffene Durchschnittsgeschwindigkeit den maximal zulässigen Längsschlupf.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: eine schematische Darstellung eines Steer-by-Wire-Lenksystems mit zwei separaten Radantrieben auf der Vorderachse, sowie
- Fig. 3:: ein Blockdiagramm einer Steuerung des Steer-by-Wire-Lenksystems mit Torque-Vectoring.

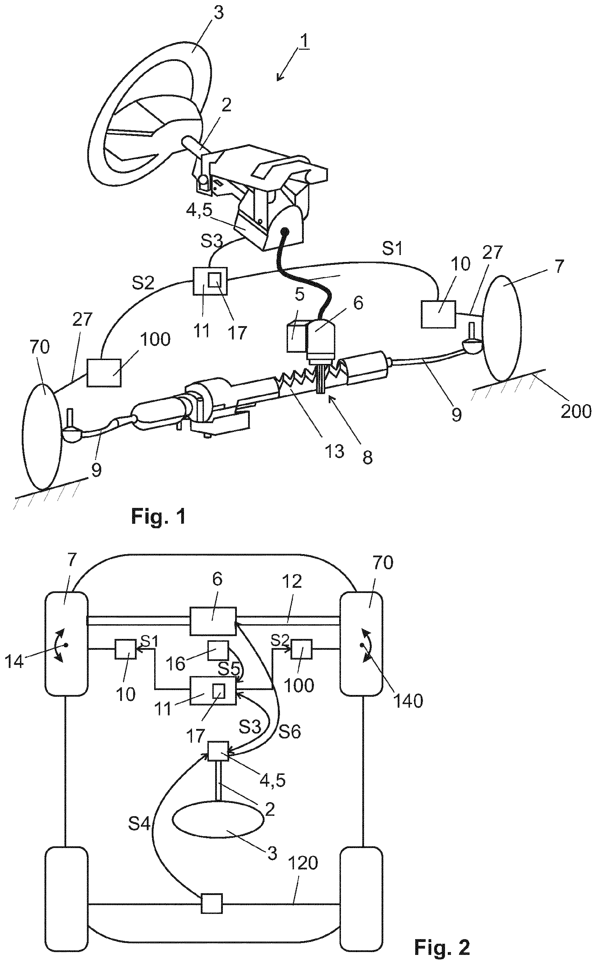

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von einer Fahrbahn 200 auf das Lenkrad 3 zu simulieren und somit dem Fahrer eine Rückmeldung über das Lenk- und Fahrverhalten des Fahrzeugs zu geben.

Der Fahrerlenkwunsch wird über den vom Drehwinkelsensor gemessenen Drehwinkel β_{SW} der Lenkwelle 2 über Signalleitungen an eine Lenkungssteuereinheit 5 weitergegeben, die in Abhängigkeit von weiteren Eingangsgrößen einen elektrischen Lenksteller 6 ansteuert, welcher die Stellung der lenkbaren Räder 7,70, welche auch als gelenkte Räder bezeichnet werden können, steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7,70. Den lenkbaren Rädern 7,70 sind Antriebsmotoren 10, 100 zugeordnet, die die lenkbaren Räder 7,70 in Form eines Einzelradantriebs separat antreiben. Es ist eine Antriebssteuerung 11 vorgesehen, die über eine Signalleitung S3 den vom Drehwinkelsensor gemessenen Drehwinkel β_{SW} der Lenkwelle 2 und weitere Signale erhält und daraus die Antriebsmomente für die lenkbaren Räder 7,70 bestimmt und diese über Signalleitungen S1, S2 an den jeweiligen Antriebsmotor 10, 100 übergibt.

In Figur 2 ist schematisch das Kraftfahrzeug mit den beiden Achsen dargestellt, wobei der Antrieb der lenkbaren Räder 7,7 auf einer Vorderachse 12 angeordnet ist. Die Vorderachse 12 umfasst bezogen auf eine Fahrtrichtung ein linkes lenkbares Rad 7 und ein rechtes lenkbares Rad 70, die über die Zahnstange 13 des Zahnstangenlenkgetriebes miteinander verbunden sind. Bei Verlagerung der Zahnstange 13 quer zur Fahrtrichtung nach rechts oder links, werden die Räder um einen jeweiligen Schwenkpunkt 14, 140 verschwenkt. Ein linker Antriebsmotor 10 ist in Fahrtrichtung links und ein rechter Antriebsmotor 100 ist in Fahrtrichtung rechts angeordnet. Die Radantriebsmotoren 10, 100 sind jeweils über Antriebswellen 27 mit den lenkbaren Rädern 7,70 verbunden. Bei den Radantriebsmotoren 10, 100 handelt es sich vorzugsweise um Elektromotoren. Die Antriebssteuerung 11 steuert über eine erste Signalleitung S1 den linken Antriebsmotor 10 und über eine zweite Signalleitung S2 den rechten Antriebsmotor 10, 100 an. Die Antriebssteuerung 11 empfängt den vom Drehwinkelsensor gemessenen Drehwinkel β_{SW} der Lenkwelle 2 über eine Signalleitung S3 vom Feedback-Aktuator 4, der vorzugsweise die Lenksteuereinheit 5 umfasst. Der Drehwinkel β_{SW} der Lenkwelle 2 wird zudem an eine Hinterachse 120 über eine Signalleitung S4 geleitet. Weiterhin wird die Position des Gaspedals 16 des Kraftfahrzeuges, vorzugsweise der Gaspedalwinkel α_{ped}, an die Antriebssteuerung 11 mittels einer weiteren Signalleitung S5 übermittelt. Radwinkelsensoren messen und übermitteln den aktuellen Winkel der gelenkten Räder und bestimmen die Durchschnittsfahrzeuggeschwindigkeit an den Rädern der Hinterachse v_{FZ}. Entsprechende Signalleitungen verbinden die Sensoren mit der Lenkungssteuereinheit 5, die die Durchschnittsfahrzeuggeschwindigkeit über die Signalleitung S6 an die Antriebssteuerung 11 weitergibt. Figur 2 veranschaulicht die Geradeausstellung, die mit der Fahrtrichtung zusammenfällt. Durch Betätigung des Gaspedals 16 kann der Fahrer das Kraftfahrzeug beschleunigen. Dazu ermittelt die Antriebssteuerung 11 die erforderlichen Antriebsmomente für die Radantriebe 10.

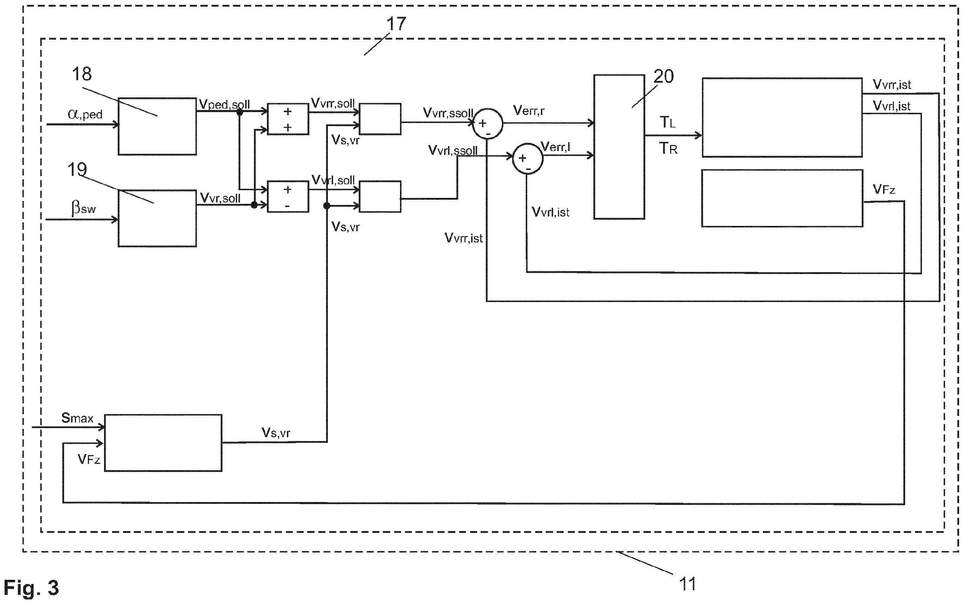

Figur 3 zeigt die Steuerung der Steer-by-Wire-Lenkung. Der vom Fahrer über das Pedal 16 eingebrachte Gaspedalwinkel α_{ped} und vom Drehwinkelsensor gemessene Drehwinkel der Lenkwelle 2, welcher auch als Lenkradwinkel β_{SW} bezeichnet werden kann, werden an die Antriebssteuerung 11 gesendet. Die Antriebssteuerung 11 weist einen Regler 17 auf, der die Antriebsmomente für die Vorderräder 7, 70 bestimmt. In einem ersten Abschnitt 18 des Reglers 17 wird mittels des Gaspedalwinkels α_{ped} eine Solldurchschnittsgeschwindigkeit der Vorderräder v_{ped,soll} bestimmt. In einem zweiten Abschnitt 19 wird anhand des Lenkradwinkels β_{SW} eine Differenzgeschwindigkeit der Vorderräder v_{vr,soll} ermittelt. Die Bewegung des Lenkrads nach links wird als (-) definiert und die Bewegung nach rechts als (+). Liegt eine Linksdrehung vor (-) und wird das Gaspedal betätigt (+), so muss das rechte Rad schneller gedreht werden als das linke Rad. Wird das Gaspedal betätigt (+) und das Lenkrad nach rechts (+) gedreht, muss das linke Rad schneller gedreht werden. Entsprechend ergibt sich eine Sollgeschwindigkeit für das linke Rad v_{vrl,soll} und eine Sollgeschwindigkeit für das rechte Rad v_{vrr,soll}. In einem nächsten Schritt werden die Sollgeschwindigkeiten begrenzt, damit der Schlupf begrenzt oder minimiert werden kann. Dazu wird die Fahrzeuggeschwindigkeit v_{FZ} über die Durchschnittsgeschwindigkeit der Hinterräder bereitgestellt. Die schlupfbegrenzte Vorderradgeschwindigkeit v_{s,vr} ergibt sich aus der Fahrzeuggeschwindigkeit v_{FZ} und dem maximal erlaubten Längsschlupf Is. Der maximal erlaubte Längsschlupf Is liegt in einem Bereich zwischen 5% und 15% der Fahrzeuggeschwindigkeit, bevorzugt bei etwa 10%. Die schlupfbegrenzte Vorderradgeschwindigkeit v_{s,vr} ergibt sich daher aus (v_{FZ}x(1+ls/100)). Die Sollgeschwindigkeit für das linke Rad v_{vrl,soll} und die Sollgeschwindigkeit für das rechte Rad v_{vrr,soll} werden auf die schlupfbegrenzte Geschwindigkeit v_{s,vr} begrenzt (v_{vrr,ssoll}, v_{vrl,ssoll}). Die an den Vorderrädern gemessenen IstGeschwindigkeiten v_{vrl,ist} und v_{vrr,ist} werden dem Regler 20 zugeführt. Aus der Differenz aus Soll- und Ist- Geschwindigkeiten (v_{err,r},v_{err,l}) wird getrennt für das jeweilige Vorderrad ein Antriebsmoment T_{L}, T_{R} berechnet. Die Antriebssteuerung 11 gibt das Antriebsmoment T_{L} über die erste Signalleitung S1 an den linken Antriebsmotor 10 und das Antriebsmoment T_{R} über die zweite Signalleitung S2 an den rechten Antriebsmotor 10 weiter. Der Regler 17 bestimmt das Antriebsmoment für die einzelnen angetriebenen Vorderräder so, dass die Differenz zwischen der Soll-und Ist-Geschwindigkeit der Vorderräder minimiert wird, wobei sichergestellt wird, dass die Geschwindigkeit sich stets innerhalb des maximal erlaubten Längsschlupfs befindet.

## Patentansprüche

1. Steer-by-Wire-Lenksystem für ein Kraftfahrzeug mit einer zwei lenkbare Räder (7,70) aufweisenden lenkbaren Vorderradachse (12), wobei die Vorderradachse (12) einen Einzelradantrieb aufweist, der mittels einer Antriebssteuerung (11) den lenkbaren Rädern (7,70) zugeordnete Radantriebe (10, 100) einzeln antreibt, **dadurch gekennzeichnet, dass** die Antriebssteuerung (11) einen Regler (17) aufweist, der in Abhängigkeit von einem Gaspedalwinkel (α_{ped}) und einem Drehwinkel (β_{SW}) einer Lenkwelle (2) eine Sollgeschwindigkeit für ein linkes Rad (v_{vrl,soll}) der lenkbaren Räder (7, 70) und eine Sollgeschwindigkeit für ein rechtes Rad (v_{vrr,soll}) der lenkbaren Räder (7, 70) bestimmt und diese auf eine schlupfbegrenzte Geschwindigkeit (v_{s,vr}) begrenzt, wobei die Antriebssteuerung (11) die Radantriebe (10, 100) einzeln derart antreibt, dass die Differenz (v_{err,r},v_{err,l}) zwischen Sollgeschwindigkeit und Istgeschwindigkeit (v_{vrr,ist}, v_{vrl,ist}) für jedes lenkbare Rad (7,70) minimal ist.

2. Steer-by-Wire-Lenksystem nach Anspruch 1, **dadurch gekennzeichnet, dass** die Begrenzung auf die schlupfbegrenzte Geschwindigkeit (v_{s,vr}) mittels eines vordefinierten maximal zulässigen Längsschlupfs (ls) und einer an einer Hinterachse des Kraftfahrzeuges abgegriffenen Durchschnittsfahrzeuggeschwindigkeit (v_{FZ}) erfolgt.

3. Steer-by-Wire-Lenksystem nach Anspruch 2, **dadurch gekennzeichnet, dass** der maximal zulässige Längsschlupf (ls) in einem Bereich von 5% bis 15% der an der Hinterachse abgegriffenen Durchschnittsfahrzeuggeschwindigkeit (v_{FZ}) liegt.

4. Steer-by-Wire-Lenksystem nach einem der vorhergehenden Ansprüche, **dadurch gekennzeichnet, dass** die Radantriebe (10, 100) Elektromotoren sind.

5. Verfahren zur Steuerung eines Steer-by-Wire-Lenksystems eines Kraftfahrzeuges mit einer zwei lenkbare Räder (7,70) aufweisenden lenkbaren Vorderradachse (12), wobei die Vorderradachse (12) einen Einzelradantrieb aufweist, der mittels einer Antriebssteuerung (11) den lenkbaren Rädern (7,70) zugeordnete Radantriebe (10, 100) einzeln antreibt, **dadurch gekennzeichnet, dass** folgende Verfahrensschritte vorgesehen sind:
• Messen eines Gaspedalwinkels (α_{ped}), eines Drehwinkels (β_{SW}) einer Lenkwelle (2) und Istgeschwindigkeiten (v_{vrr,ist}, v_{vrl,ist}) der lenkbaren Räder (7,70),
• Bestimmen einer Solldurchschnittsgeschwindigkeit der Vorderräder (v_{ped,soll}) mittels des Gaspedalwinkels (α_{ped}),
• Ermitteln einer Differenzgeschwindigkeit der Vorderräder (v_{vr,soll}) anhand des Drehwinkels (β_{SW}) der Lenkwelle (2),
• Bestimmen einer Sollgeschwindigkeit für ein linkes Rad (v_{vrl,soll}) der lenkbaren Räder (7, 70) und einer Sollgeschwindigkeit für ein rechtes Rad (v_{vrr,soll}) der lenkbaren Räder (7, 70) anhand der Solldurchschnittsgeschwindigkeit der Vorderräder (v_{ped,soll})und der Differenzgeschwindigkeit der Vorderräder (v_{vr,soll}),
• Begrenzen der Sollgeschwindigkeit für das linke Rad (v_{vrl,soll}) der lenkbaren Räder (7, 70) und der Sollgeschwindigkeit für das rechte Rad (vᵥᵣᵣ,ₛₒₗₗ) der lenkbaren Räder (7, 70) auf eine schlupfbegrenzte Geschwindigkeit (v_{s,vr}),
• Bestimmen einer Differenz (v_{err,r},v_{err,l}) zwischen den Sollgeschwindigkeiten (v_{vrr,soll}, v_{vrl,soll}) für das linke Rad (v_{vrl,soll}) der lenkbaren Räder (7, 70) und für das rechte Rad (v_{vrr,soll}) der lenkbaren Räder (7, 70) und den Istgeschwindigkeiten (v_{vrr,ist}, v_{vrl,ist}) der lenkbaren Räder (7,70) und Berechnen von Antriebsmomenten (T_{L}, T_{R}) für die lenkbaren Räder (7,70) zur Minimierung der Differenz.

6. Verfahren nach Anspruch 5, **dadurch gekennzeichnet, dass** die Begrenzung auf die schlupfbegrenzte Geschwindigkeit (v_{s,vr}) mittels eines vordefinierten maximal zulässigen Längsschlupfs (ls) und einer an einer Hinterachse abgegriffenen Durchschnittsfahrzeuggeschwindigkeit (v_{FZ}) erfolgt.

7. Verfahren nach Anspruch 6, **dadurch gekennzeichnet, dass** der maximal zulässige Längsschlupf (ls) in einem Bereich von 5% bis 15% der an der Hinterachse abgegriffenen Durchschnittsfahrzeuggeschwindigkeit (v_{FZ}) liegt.

8. Verfahren nach einem der vorhergehenden Ansprüche 6 bis 7, **dadurch gekennzeichnet, dass** die Begrenzung der Sollgeschwindigkeiten auf die an der Hinterachse abgegriffenen Durchschnittsfahrzeuggeschwindigkeit (v_{FZ}) den maximal zulässigen Längsschlupf (ls) berücksichtigt.

## Claims

1. A steer-by-wire steering system for a motor vehicle with a steerable front wheel axle (12) comprising two steerable wheels (7, 70), wherein the front wheel axle (12) comprises a single wheel drive which, by means of a drive controller (11), individually drives wheel drives (10, 100) which are associated with the steerable wheels (7, 70), **characterized in that** the drive controller (11) comprises a controller (17) which determines a target speed for a left-hand wheel (v_{vrl,soll}) of the steerable wheels (7, 70) and a target speed for a right-hand wheel (v_{vrr,soll}) of the steerable wheels (7, 70) in accordance with an accelerator pedal angle (α_{ped}) and a rotational angle (β_{SW}) of a steering shaft (2), and which limits said target speeds to a slip-limited speed (v_{s,vr}), wherein the drive controller (11) individually drives the wheel drives (10, 100) in such a way that the difference (v_{err,r}, v_{err,l}) between the target speed and the actual speed (v_{vrr,ist}, v_{vrl,ist}) for each steerable wheel (7, 70) is minimal.

2. The steer-by-wire steering system as claimed in claim 1, **characterized in that** the limitation to the slip-limited speed (v_{s,vr}) is implemented by means of a predefined maximum permissible longitudinal slip (Is) and an average vehicle speed (v_{FZ}) which is tapped at a rear axle of the motor vehicle.

3. The steer-by-wire steering system as claimed in claim 2, **characterized in that** the maximum permissible longitudinal slip (Is) lies in a range from 5% to 15% of the average vehicle speed (v_{FZ}) which is tapped at the rear axle.

4. The steer-by-wire steering system as claimed in one of the preceding claims, **characterized in that** the wheel drives (10, 100) are electric motors.

5. A method for controlling a steer-by-wire steering system of a motor vehicle with a steerable front wheel axle (12) comprising two steerable wheels (7, 70), wherein the front wheel axle (12) comprises a single wheel drive which, by means of a drive controller (11), individually drives wheel drives (10, 100) which are associated with the steerable wheels (7, 70), **characterized in that** the following method steps are provided:
• measuring an accelerator pedal angle (α_{ped}), a rotational angle (β_{SW}) of a steering shaft (2) and actual speeds (v_{vrr,ist}, v_{vrl,ist}) of the steerable wheels (7, 70),
• determining a target average speed of the front wheels (v_{ped,soll})by means of the accelerator pedal angle (α_{ped}),
• determining a differential speed of the front wheels (v_{vr,soll}) on the basis of the rotational angle (β_{SW}) of the steering shaft (2),
• determining a target speed for a left-hand wheel (v_{vrl,soll}) of the steerable wheels (7, 70) and a target speed for a right-hand wheel (v_{vrr,soll}) of the steerable wheels (7, 70) on the basis of the target average speed of the front wheels (v_{ped,soll}) and the differential speed of the front wheels (Vvr,soll),
• limiting the target speed for the left-hand wheel (v_{vrl,soll}) of the steerable wheels (7, 70) and the target speed for the right-hand wheel (v_{vrr,soll}) of the steerable wheels (7, 70) to a slip-limited speed (v_{s,vr}),
• determining a difference (v_{err,r}, v_{err,l}) between the target speeds (v_{vrr,soll}, v_{vrl,soll}) for the left-hand wheel (v_{vrl,soll}) of the steerable wheels (7, 70) and for the right-hand wheel (v_{vrr,soll}) of the steerable wheels (7, 70) and the actual speeds (v_{vrr,ist}, v_{vrl,ist}) of the steerable wheels (7, 70) and calculating drive torques (T_{L}, T_{R}) for the steerable wheels (7, 70) in order to minimize the difference.

6. The method as claimed in claim 5, **characterized in that** the limitation to the slip-limited speed (v_{s,vr}) is implemented by means of a pre-defined maximum permissible longitudinal slip (Is) and an average vehicle speed (v_{FZ}) which is tapped at a rear axle.

7. The method as claimed in claim 6, **characterized in that** the maximum permissible longitudinal slip (Is) lies in a range from 5% to 15% of the average vehicle speed (v_{FZ}) which is tapped at the rear axle.

8. The method as claimed in one of the preceding claims 6 to 7, **characterized in that** the limitation of the target speeds to the average vehicle speed (v_{FZ}) which is tapped at the rear axle takes into account the maximum permissible longitudinal slip (Is).

## Revendications

1. Système de direction à commande par câble électrique destiné à un véhicule automobile, comprenant un essieu de roue avant dirigeable (12) présentant deux roues dirigeables (7, 70), l'essieu de roue avant (12) présentant un entraînement de roue individuelle qui entraîne individuellement au moyen d'une commande d'entraînement (11) des entraînements de roue (10, 100) associés aux roues dirigeables (7, 70),
**caractérisé en ce que** la commande d'entraînement (11) présente un régulateur (17) qui détermine en fonction d'un angle de pédale d'accélérateur (α_{ped}) et d'un angle de rotation (β_{SW}) d'un arbre de direction (2) une vitesse théorique pour une roue gauche (v_{vrl,soll}) des roues dirigeables (7, 70) et une vitesse théorique pour une roue droite (v_{vrr,soll}) des roues dirigeables (7, 70) et les limite à une vitesse à glissement limité (v_{s,vr}) , la commande d'entraînement (11) entraînant les entraînements de roue (10, 100) individuellement de telle sorte que la différence (v_{err,r}, v_{err,l}) entre vitesse théorique et vitesse réelle (v_{vrr,ist}, v_{vrl,ist}) est minimale pour chaque roue dirigeable (7, 70).

2. Système de direction à commande par câble électrique selon la revendication 1, **caractérisé en ce que** la limitation à la vitesse à glissement limité (v_{s,vr}) est effectuée au moyen d'un glissement longitudinal (ls) maximal admissible prédéfini et d'une vitesse de véhicule moyenne (v_{FZ}) prélevée au niveau d'un essieu arrière du véhicule automobile.

3. Système de direction à commande par câble électrique selon la revendication 2, **caractérisé en ce que** le glissement longitudinal (ls) maximal admissible se situe dans une plage de 5 % à 15 % de la vitesse de véhicule moyenne (v_{FZ}) prélevée au niveau de l'essieu arrière.

4. Système de direction à commande par câble électrique selon l'une quelconque des revendications précédentes, **caractérisé en ce que** les entraînements de roue (10, 100) sont des moteurs électriques.

5. Procédé permettant de commander un système de direction à commande par câble électrique d'un véhicule automobile comprenant un essieu de roue avant dirigeable (12) présentant deux roues dirigeables (7, 70), l'essieu de roue avant (12) présentant un entraînement de roue individuelle qui entraîne individuellement au moyen d'une commande d'entraînement (11) des entraînements de roue (10, 100) associés aux roues dirigeables (7, 70),
**caractérisé en ce que** les étapes de procédé suivantes sont prévues :
• mesurer un angle de pédale d'accélérateur (α_{ped}) , un angle de rotation (β_{SW}) d'un arbre de direction (2) et des vitesses réelles (v_{vrr,ist}, v_{vrl,ist}) des roues dirigeables (7, 70),
• déterminer une vitesse moyenne théorique des roues avant (v_{ped,soll}) au moyen de l'angle de pédale d'accélérateur (α_{ped}) ,
• établir une vitesse différentielle des roues avant (v_{vr,soll}) à l'aide de l'angle de rotation (β_{SW}) de l'arbre de direction (2),
• déterminer une vitesse théorique pour une roue gauche (v_{vrl,soll}) des roues dirigeables (7, 70) et une vitesse théorique pour une roue droite (v_{vrr,soll}) des roues dirigeables (7, 70) à l'aide de la vitesse moyenne théorique des roues avant (v_{ped,soll}) et de la vitesse différentielle des roues avant (v_{vr,soll}) ,
• limiter la vitesse théorique pour la roue gauche (v_{vrl,soll}) des roues dirigeables (7, 70) et la vitesse théorique pour la roue droite (v_{vrr,soll}) des roues dirigeables (7, 70) à une vitesse à glissement limité (v_{s,vr}) ,
• déterminer une différence (v_{err,r}, v_{err,l}) entre les vitesses théoriques (v_{vrr,soll}, v_{vrl,soll}) pour la roue gauche (v_{vrl,soll}) des roues dirigeables (7, 70) et pour la roue droite (v_{vrr,soll}) des roues dirigeables (7, 70) et les vitesses réelles (v_{vrr,ist}, v_{vrl,ist}) des roues dirigeables (7, 70) et calculer des couples d'entraînement (T_{L}, T_{R}) pour les roues dirigeables (7, 70) afin de minimiser la différence.

6. Procédé selon la revendication 5, **caractérisé en ce que** la limitation à la vitesse à glissement limité (v_{s,vr}) est effectuée au moyen d'un glissement longitudinal (ls) maximal admissible prédéfini et d'une vitesse de véhicule moyenne (v_{FZ}) prélevée au niveau d'un essieu arrière.

7. Procédé selon la revendication 6, **caractérisé en ce que** le glissement longitudinal (ls) maximal admissible se situe dans une plage de 5 % à 15 % de la vitesse de véhicule moyenne (v_{FZ}) prélevée au niveau de l'essieu arrière.

8. Procédé selon l'une quelconque des revendications précédentes 6 et 7, **caractérisé en ce que** la limitation des vitesses théoriques à la vitesse de véhicule moyenne (v_{FZ}) prélevée au niveau de l'essieu arrière tient compte du glissement longitudinal (ls) maximal admissible.
